# EUROPEAN PATENT SPECIFICATION

(11) **EP 0 522 819 B1**
(45) Date of publication and mention of the grant of the patent: **21.05.1997**
(21) Application number: 92306199.8
(22) Date of filing: 06.07.1992
(51) Int. Cl.: F02B 37/14, F02B 39/10

(54) **Drive system for turbocharger with rotary electric machine**
Antriebssystem für Turbolader mit elektrischer Drehmaschine
Système d'entraînement pour turbocompresseur comprenant une machine électrique rotative

(30) Priority: 06.07.1991 JP 192456/91
(43) Date of publication of application: 13.01.1993
(73) Proprietor: Isuzu Motors Limited, Shinagawa-ku, Tokyo 140 (JP)
(72) Inventor: Akiyama, Kazunari, Machida-shi, Tokyo (JP)
(74) Representative: Brunner, Michael John

(56) References cited:
- EP-A- 0 079 100
- EP-A- 0 159 146

## Description

The present invention relates to a drive system for a turbocharger with a rotary electric machine which, in particular, can easily generate a phase of an initialized position of driving AC electric power source of AC motor generator.

In recent years, there have been proposed various systems for recovering exhaust energy transformed rotary force from electric power energy.

Japanese Laid-Open Patent Publication No. 63-302132 discloses, as one such system, a system for a turbocharger with a rotary electric machine having a turbine rotatable by the energy of exhaust gases emitted from an internal combustion energy and a compressor coupled directly to the turbine, for compressing intake air and supplying compressed intake air to the engine. An AC motor generator coupled directly to the rotatable shaft of the turbine operates as a generator, and exhaust energy obtained from the turbine is recovered as DC electric power for the generated electric power. When the engine operates at low speed and the exhaust gases are emitted from the engine under low pressure and turbocharged pressure from the engine declines, recovered and stored DC electric power is converted to AC electric power by an inverter, to apply voltage to the AC motor generator to operate it as a motor, which assists the rotation of the compressor for obtaining necessary supercharged air.

The above drive system for a turbocharger with the rotary electric machine has small magnet pieces mounted on the initialized position of the rear side of the compressor impeller and a picking-up coil up mounted on the turbine housing on the opposite side of the permanent magnet piece. When the AC motor generator operates as a motor, polyphase current is generated and supplied to the AC motor generator corresponding to a signal of initialized position from a position sensor composed of the permanent magnet pieces and the coil. That is, a frequency of supplied electric power is read with a pulse interval of a signal of initialized position from the positional sensor, and a first phase starts as the signal of initialized position functions as a trigger; successively, other phases start at a predetermined phase difference. Since a positional adjustment between a mechanically rotary initialized position of a positional sensor and an electrically initialized position of phase is only executed when the system and the turbocharger with the rotary electric machine are newly loaded on a vehicle or when a unit of a turbocharger with the rotary electric machine or a drive system is replaced, when a motor vehicle is actuating, positional adjustment is not possible. A rotor of the AC motor generator is screwed on a rotational shaft, and since the rotational speed reaches nearly 200,000 rpm, the rotor may get out of position. When the rotor gets out of position, it brings about not only inefficient operation but also damage of the inverter. In addition, every replacement of the unit of the turbocharger with the rotary electric machine and the system for driving requires time for the positional adjustment.

According to the present invention, there is provided a system for driving a turbocharger with an AC motor generator, the turbocharger having a turbine rotatable by the exhaust gases emitted from an engine, a compressor rotatable by the turbine, and a rotational shaft coupling the turbine and the compressor and having the AC motor generator mounted thereon, the system comprising:
a positional sensor for detecting a mechanically initialized angular position of the rotatable shaft;
a phase detector means for detecting an electrically initialized position of the phase of the AC motor generator when it is operating as a generator;
a first calculation means for calculating the difference between the mechanically initialized angular position from the positional sensor and the initialized phase position from the phase detector means; and
a second calculation means for calculating a phase initialized position of an AC electric power source for driving the AC motor generator as a motor by adding the mechanically initialized angular position from the positional sensor to the difference calculated by the first calculation means.

When the rotor is rotated in a case where the rotary electric machine operates as a motor, by measuring the phase of polyphase AC voltage output to a terminal of the power source of the AC motor generator, or by measuring the mechanical position of AC motor generator from the positional sensor, initiation of polyphase AC voltage for operating the rotary electric machine as a motor from the above measured value is generated.

Objects, features and advantages of the present invention will become more apparent from the following description when taken in conjunction with the accompanying drawings in which preferred embodiments of the present invention are shown by way of illustrative example.

In the drawings:
Fig. 1 is a block diagram of a system for driving a turbocharger with the rotary electric machine according to the present invention;
Fig. 2 is a longitudinal cross-sectional view of a composition of a turbocharger according to the present invention;
Fig. 3 is a block diagram of a system for driving a rotary electric machine;
Fig. 4 is a flow chart of a main program;
Fig. 5 is a flow chart of an interrupt program;
Fig. 6 is a characteristic diagram for operation; and,
Fig. 7 is a flow chart of phase order program.

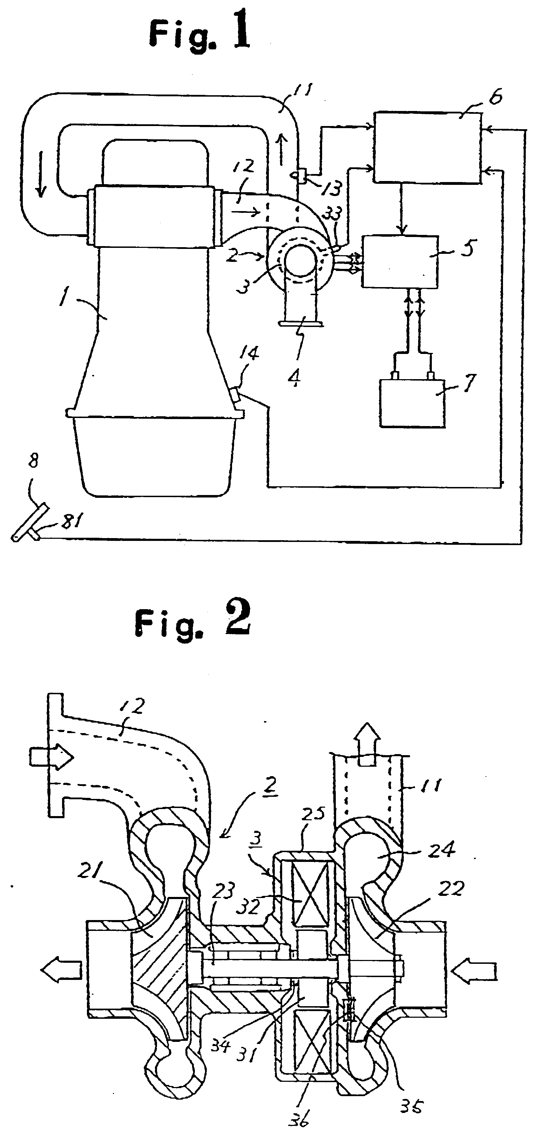

As shown in Fig. 1 and 2, 1 denotes an engine for driving a motor vehicle (not shown), with air drawn from an intake pipe 11 and supplied fuel. Exhaust gases after combustion rotate a turbine 21 by being supplied to a turbocharger 2 through an exhaust pipe 12. A compressor 22 coupled directly to the rotatable shift 23 of the turbine 21 compresses air by torque of the turbine 21 rotatable by exhaust gases, and supplies compressed air to the engine from the intake pipe 11 through a scroll 24 to increase the output of the engine, and is operated by compressor signals from a boost pressure sensor 13 mounted on the interior of pipe 11 for detecting the pressure of the supercharged air and a rotational sensor of the engine 14 for detecting the rotational speed of the engine for transmitting to a controller described later.

Rotary electric machine 3 comprising AC motor generator has rotor 31 fixed on the rotational shaft 23 by screw 34 and a stator 32 mounted on the interior wall of housing 25 of turbocharger 2. The rotor 31, for instance, has a field magnet of a permanent magnet and comprises three phase synchronous rotary electric machine with the stator 32. When supercharging of the compressor 22 is not obtained sufficiently by drive force of turbine 21 by exhaust energy, supercharging of compressor 22 is assisted by supplying electric power with the rotary electric machine 3.

As shown clearly in Fig. 2, positional sensor 33 is composed of permanent magnet piece 35 and coil 36 for detecting the rotational speed of the rotary electric machine 3 and initialized position by detecting rotational impeller speed of compressor 22, whereby detected positional signal PS is transmitted to a controller 6. In Fig. 1, positional sensor 33 is indicated diagrammatically in a roughly set position, without details of the positional sensor 33 being shown.

Exhaust pipe 4 discharges exhaust gases from exhaust turbine 2 to outside electric power converter 5. The converter 5 inputs electric power from battery 7, for converting to predetermined AC electric power for the rotary electric machine 3, and stores the generated electric power to battery 7 after rectification when the rotary electric machine generates electric power. Electric power converter 5 has a rectifier for rectifying the AC electric power output from the rotary electric machine 3 and a power device such as an inverter for converting the DC electric power of battery 7 to electric power having the predetermined frequency. A control command for achieving the predetermined frequency is supplied from a controller 6.

An accelerator pedal 8 is operated by a driver of the motor vehicle to control the rate of fuel to be supplied to the engine 1. An accelerator pedal movement sensor 81 mounted on the accelerator pedal 8 detecting the depression of the accelerator pedal applies a detected signal to the controller 6. The controller 6 comprises a microcomputer including a central processing unit for executing arithmetic operations, various memories for storing the results of arithmetic operations and a control program, and input/output ports. When detected signals are applied from the boost sensor 13, the engine speed sensor 15, positional sensor 33, and the accelerator pedal movement sensor 81 to the controller 6, the controller effects, according to the control program, arithmetic operations on the supplied signals and supplies a control command to the inverter 5 for converting the DC electric power to AC electric power having a predetermined frequency.

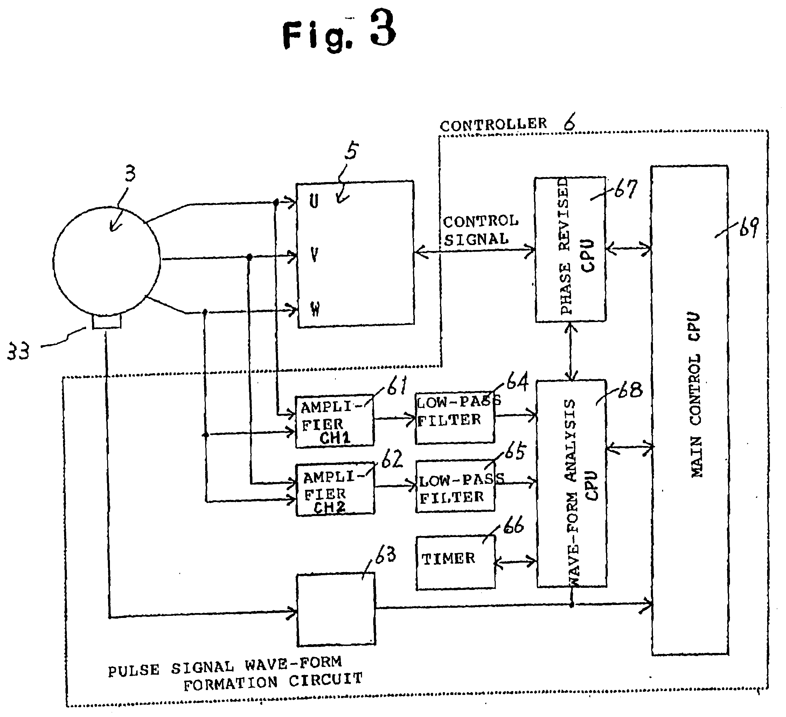

Fig. 3 is a block diagram illustrating the rotary electric machine 3 including positional sensor 33, electric power converter 5 and controller 6 extracted from a system for driving a turbocharger with the rotary electric machine. As shown in Fig. 3, a controller 6 has an amplifier 61 insulated between a primary and a secondary circuit for amplifying voltage of V phase against W phase and an amplifier 62 insulated between a primary and a secondary circuit for amplifying voltage of U phase against W phase. Input ends of amplifiers 61, 62 are connected to three phase electric power source terminal of the rotary electric machine. A luminous element and a receiver element are arranged opposingly to an input side of the amplifiers 61, 62, and the input side and output side of amplifiers 61, 62 are electrically insulated by inputting a signal to OP amplifier after receiving receiver element through converting a signal of the rotary electric machine 3 supplied voltage from the input side to a luminous signal by the luminous element.

A pulse signal wave-form formation circuit 63 makes a wave-form for positional signal PS output from positional sensor 33. Low-pass filters 64, 65 remove harmonic elements from a signal output from amplifiers 61, 62. Timer 66 prescribes the rotational period of the rotary electric machine. 67 denotes a CPU for a phase revision, 68 denotes a CPU for wave-form analysis, and 69 denotes a CPU for main control. As operational description of the embodiment, controller 6 detects a drive condition when the engine 1 operates with a load, and turbine 21 is driven by the exhaust energy emitted from the engine 1, and a compressor 22, coupled directly to the turbine, compresses intake air and supplies the compressed intake air to the engine 1. The rotary electric machine 3 coupled directly to the rotatable shaft 23 of turbine 21 operates as a generator and the exhaust energy obtained from the turbine 21 is recovered as generated electric power into DC electric power and stored to the battery 7 under control of the controller 6.

Controller 6 detects declining exhaust gas pressure with declining rotational speed of the engine 1, and declining pressure of compressed air from compressor 22, and controller 6 provides control to drive the rotary electric machine 3 as a motor by an inverter in electric converter 5 which converts the stored DC electric power to AC electric power in order to obtain pressure of supercharged air, assisting the rotation of compressor 23. When the rotary electric machine 3 is rotated by the turbine 21, three phase AC voltage in proportion to the rotational speed of rotary electric engine is generated at a terminal of the electric power source of the rotary electric machine. This analog voltage is respectively amplified by amplifiers 61, 62 insulated between a primary and secondary circuit, and high harmonic element is removed by low-pass filters 64, 65. The voltage is then converted to digital signals by A/D converter (not shown) in wave-form analysis CPU 68 and is stored in a register of wave form analysis CPU 68 as a first storage in which the data is renewed every minute. Positional signal PS is sent to wave-form analysis CPU 68 and main control CPU 69 after positional signal PS is formed as a wave-form by pulse signal wave-form formation circuit 63. Wave-form analysis CPU 68 always calculates the number of clock pulses between positional signal PS and the next positional signal PS, and sets the count value as T1 to timer 66 after receiving next positional signal.

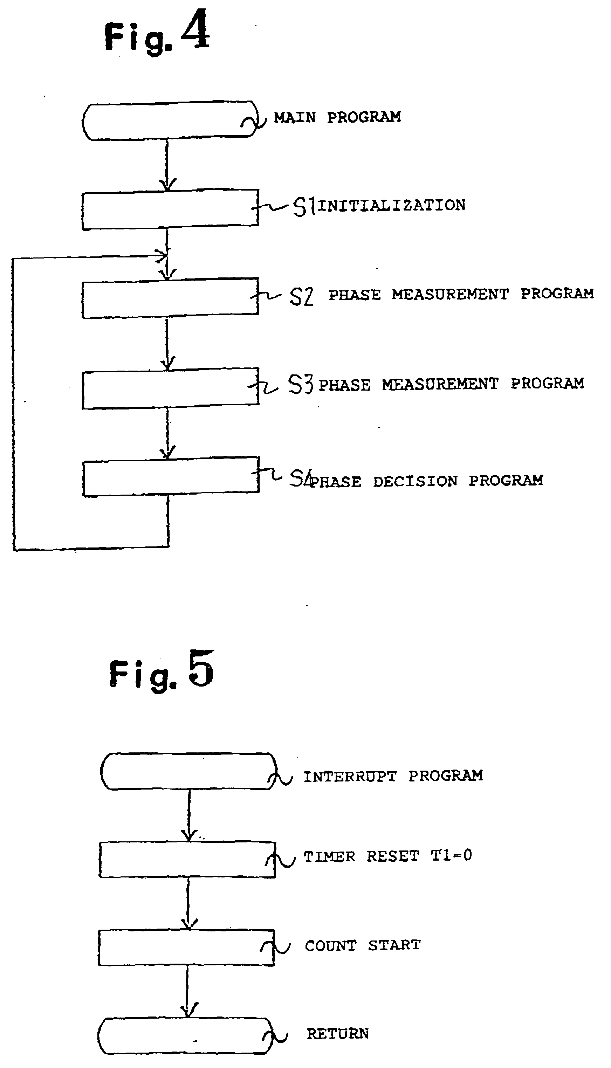

When the rotary electric machine 3 is not operated by inverter 5, that is, a main control CPU 69 of controller 6 detects the condition of generator or racing by turbine 21, main control CPU 69 executes the main program shown in Fig. 4. During performance of the main program, when positional signal PS from positional sensor 33 is input to main control CPU 69, interrupt program shown in Fig. 5 is performed, timer 66 starts counting after resetting, and sends a clear signal when timer 66 reaches set time T1.

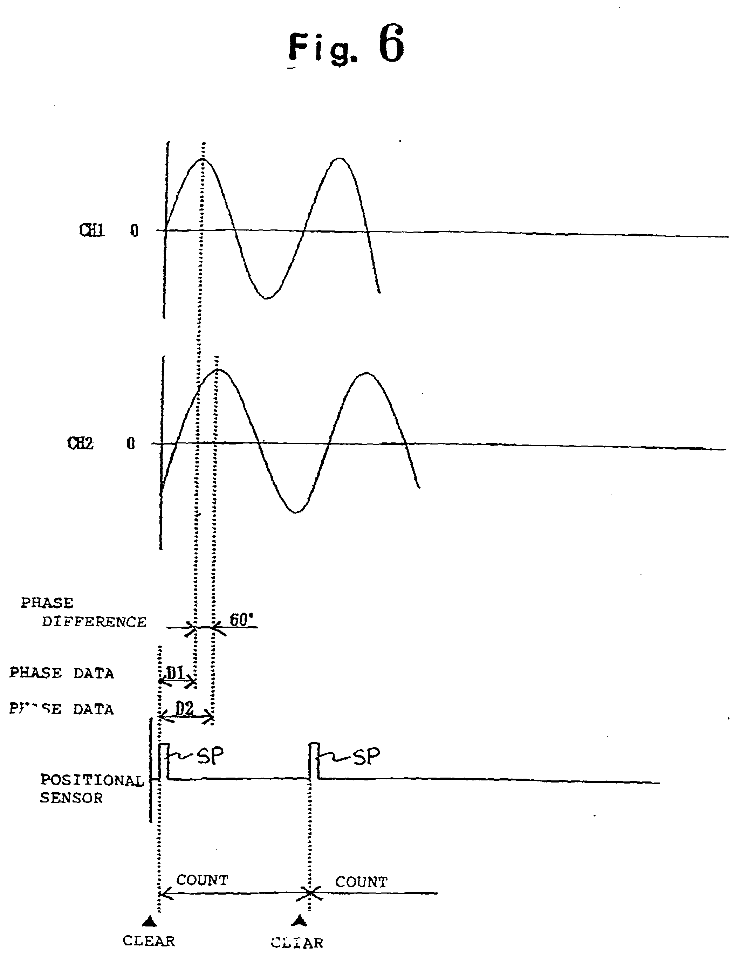

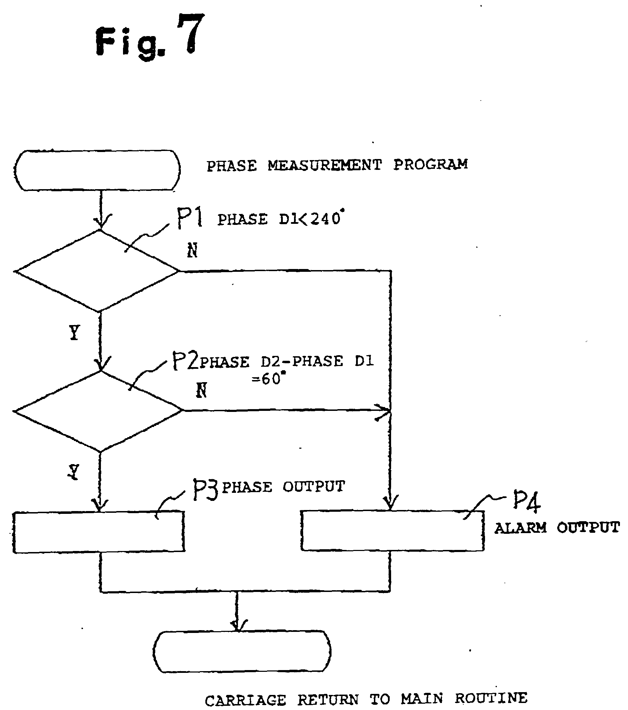

As to S1 of main program, after initialization of each port of controller 6, CH 1 phase adjustment program for measuring the phase of voltage wave-form of U phase with respect to W phase is performed. The program reads out voltage wave-form indicated in CH 1 shown in Fig. 6, and measures phase D1 up to the maximum wave value from positional signal PS. With respect to performance of CH 2 phase measurement program for measuring phase of voltage wave-form of V phase with respect to W phase by main program S3, the program reads out voltage waveform as indicated in CH 2 of Fig. 6, and measures up to the maximum wave value from positional signal PS, and then phase order decision program is performed by main program S4. The program, as shown in P1 of Fig. 7, decides whether or not the data of phase D1 is less than 240°. In a case where decision is decided as N by decision step P1, since rotor position between positional sensor 33 and the rotary electric machine 3 indicates largely slip from initialized position, an alarm is sent by P4. In a case where decision is decided as Y by decision step P1, decision operation P2 of (D2 - D1 = 60°)? is performed. In a case where the decision is decided as N by decision step P2, since it indicates a failure in the desired position between positional sensor 33 and rotor of the rotary electric machine 3 or rotor or stator, an alarm is sent by P4. When the decision is decided as Y by P2, as indicated at P3, phase D1 measured by S2 of the main program is stored in a register of main control CPU 69 for performing carriage return to main routine and then, according to the instruction from controller 6, when the rotary electric machine 3 is operated as a motor, three phase AC electric power for operating the rotary electric machine 3 is made with electric power converter 5 for supplying voltage to the rotary electric machine 3.

As described above, according to the present invention, since the system of the present invention can always measure the phase for the rotary electric machine, and send an alarm immediately when the phase gets out of order, electric power converter as power part is not damaged. And when a drive system of a conventional turbocharger is loaded or replaced on a motor vehicle, phase adjustment is not required. Accordingly, it largely contributes to simplify of operation and reduction of operational cost.

## Claims

1. A system for driving a turbocharger (2) with an AC motor generator (3), the turbocharger (2) having a turbine (21) rotatable by the exhaust gases emitted from an engine (1), a compressor (22) rotatable by the turbine (21), and a rotational shaft (23) coupling the turbine (21) and the compressor (22) and having the AC motor generator mounted thereon, the system comprising:
a positional sensor (33) for detecting a mechanically initialized angular position of the rotatable shaft (23);
a phase detector means (6) for detecting an electrically initialized position of the phase of the AC motor generator (3) when it is operating as a generator;
a first calculation means (6) for calculating the difference between the mechanically initialized angular position from the positional sensor (33) and the initialized phase position from the phase detector means (6); and
a second calculation means (6) for calculating a phase initialized position of an AC electric power source (7,5) for driving the AC motor generator (3) as a motor by adding the mechanically initialized angular position from the positional sensor to the difference calculated by the first calculation means.

2. A system according to claim 1, comprising means for generating an alarm when the difference calculated by the first calculation means is greater than 240°.

3. A system according to claim 1 or claim 2, wherein the AC motor generator (3) is drivable as a generator by the turbine (21) to generate 3 phase AC power, and comprising means for generating an alarm when the difference between one phase of the supply generated by the AC motor generator and a second phase of the supply generated by the AC motor generator is not equal to 60°.

## Patentansprüche

1. System zum Antreiben eines Turboladers (2) mit einem AC-Motor-Generator (3), wobei der Turbolader (2) eine durch die von der Verbrennungsmaschine (1) abgegebenen Auspuffgase drehbare Turbine (21) enthält, einen durch die Turbine (21) drehbaren Kompressor (22) und einen rotierenden Schaft (23), der die Turbine (21) und den Kompressor (22) miteinander kuppelt und an dem der AC-Motor-Generator befestigt ist, wobei das System beinhaltet:
- einen Positionssensor (33) zum Bestimmen eines mechanisch voreingestellten Winkels des drehbaren Schaftes (23);
- ein Phasendetektionsmittel (6) zum Bestimmen einer elektrisch eingerichteten Position der Phase des AC-Motor-Generators (3), falls er als Generator arbeitet;
- ein erstes Berechnungsmittel (6) zum Berechnen der Differenz zwischen der mechanisch eingerichteten Winkelposition von dem Positionssensor (33) und der von dem Phasendetektormittel (6) eingerichteten Phasenposition und
- ein zweites Berechnungsmittel (6) zum Berechnen einer eingestellten Phasenposition einer elektrischen AC-Energiequelle (7,5) zum Antreiben des AC-Motor-Generators (3) als Motor durch Zufügen der mechanisch festgestellten Winkelposition vom Positionssensor zu der durch das erste Rechenmittel bestimmten Differenz.

2. System nach Ansprch 1, das weiter ein Mittel zum Erzeugen eines Alarms enthält, der ausgelöst wird, wenn die durch das erste Berechnungsmittel bestimmte Phasendifferenz größer als 240° ist.

3. System nach Ansprch 1 oder Anspruch 2, worin der AC-Motor-Generator (3) durch die Turbine (21) als Generator antreibbar ist und einen 3-Phasen-Wechselstrom erzeugt, und das System weiter ein Mittel zum Erzeugen eines Alarms enthält, der ausgelöst wird, wenn eine Phase des durch den AC-Motor-Generator erzeugten Netzes und eine zweite Phase des durch den AC-Motor-Generator erzeugten Netzes eine Phasendifferenz aufweisen, die nicht genau 60° beträgt.

## Revendications

1. Système pour entraîner un turbocompresseur (2) par un moteur-générateur à courant alternatif (3), le turbocompresseur (2) présentant une turbine (21) qui peut être mise en rotation par les gaz d'échappement émis par un moteur (1), un compresseur (22) qui peut être mis en rotation par la turbine (21) et un arbre de rotation (23) couplant la turbine (21) et le compresseur (22) et sur lequel est monté le moteur-générateur à courant alternatif, le système comprenant:
un détecteur de position (33) pour détecter une position angulaire initialisée mécaniquement de l'arbre rotatif (23);
un moyen (6) à détecteur de phase pour détecter une phase initialisée électriquement du moteur-générateur à courant alternatif (3) lorsque ce dernier fonctionne comme générateur;
un premier moyen de calcul (6) pour calculer la différence entre la position angulaire initialisée mécaniquement fournie par le détecteur de position (33) et la phase initialisée fournie par le moyen (6) à détecteur de phase; et
un deuxième moyen de calcul (6) pour calculer une position initialisée en phase d'une source d'énergie électrique à courant alternatif (7, 5), pour entraîner le moteur-générateur à courant alternatif (3) comme moteur en ajoutant la position angulaire initialisée mécaniquement fournie par le détecteur de position à la différence calculée par le premier moyen de calcul.

2. Système selon la revendication 1, comprenant un moyen pour produire une alarme lorsque la différence calculée par le premier moyen de calcul est supérieure à 240°.

3. Système selon la revendication 1 ou la revendication 2, dans lequel le moteur-générateur à courant alternatif (3) peut être entraîné comme un générateur par la turbine (21), pour produire une énergie à courant alternatif triphasé, et comprenant un moyen pour produire une alarme lorsque la différence entre une phase de l'alimentation fournie par le moteur-générateur à courant alternatif et une deuxième phase de l'alimentation fournie par le moteur-générateur à courant alternatif n'est pas égale à 60°.
